## Europäisches Patentamt
## European Patent Office
### Office européen des brevets

(11) Veröffentlichungsnummer: **0 289 747**
**A1**

# (12) EUROPÄISCHE PATENTANMELDUNG

(21) Anmeldenummer: **88103950.7**

(22) Anmeldetag: **12.03.88**

(51) Int. Cl.4 **G01L 3/26 , G01M 15/00**

(30) Priorität: **05.05.87 DE 3714881**
**07.10.87 DE 3733869**

(43) Veröffentlichungstag der Anmeldung:
**09.11.88 Patentblatt 88/45**

(84) Benannte Vertragsstaaten:
**BE DE FR GB IT NL SE**

(71) Anmelder: **Battelle Motor- und Fahrzeugtechnik GmbH**
**Am Römerhof 35 Postfach 90 01 60**
**D-6000 Frankfurt am Main 90(DE)**

(72) Erfinder: **Decker, Hans Joachim, Dipl.-Ing.**
**Breitenbachstrasse 63**
**D-6200 Wiesbaden(DE)**
Erfinder: **Strauss, Eberhard, Dr.**
**Lindenstrasse 32**
**D-6103 Griesheim(DE)**
Erfinder: **Gerrath, Karl-Heinz, Dr.**
**Lindenstrasse 2**
**D-6103 Griesheim(DE)**
Erfinder: **Vinson, Heinz**
**Wallstrasse 15**
**D-6070 Langen(DE)**

(74) Vertreter: **Sartorius, Peter, Dipl.-Ing.**
**Battelle-Institut e.V. Abteilung Patente Am Römerhof 35**
**D-6000 Frankfurt am Main 90(DE)**

(54) **Verfahren zur Messung des Wirkungsgrades eines Kraftfahrzeug-Antriebsaggregates.**

(57) Beschrieben wird ein Verfahren zur laufenden Messung des Wirkungsgrads eines Kraftfahrzeug-Antriebsaggregats während des Fahrzeugbetriebs. Es werden die Drehzahl, das Drehmoment und der Kraftstoffverbrauch des Motors gleichzeitig und fortlaufend gemessen. Für Drehzahl-Drehmoment-Wertepaare, die innerhalb eines Meßbereiches gehäuft vorkommen und über eine vorbestimmte Zeit im wesentlichen konstant bleiben, werden die Leistung sowie der Wirkungsgrad des Motors berechnet. Die Wirkungsgrad-Meßwerte werden als Funktion der (Betriebs-)Zeit aufgetragen. Aus dem zeitlichen Verlauf des Wirkungsgrades kann rechtzeitig vor dem Ausfall eines Aggregatteils abgelesen werden, wann das Teil repariert oder ersetzt werden muß.

Fig. 4

## Verfahren zur Messung des Wirkungsgrads eines Kraftfahrzeug-Antriebsaggregats

Die Erfindung betrifft ein Verfahren zur laufenden Messung der Leistung eines Kraftfahrzeug-Antriebsaggregats während des Fahrzeugbetriebs, wobei das Drehmoment und die zugehörige Drehzahl gemessen werden und daraus die Leistung des Motors bestimmt wird.

Ein derartiges Verfahren ist beschrieben in einem Aufsatz von M. Faber "Meßeinrichtungen für die Dauerüberwachung in der Antriebstechnik", VDI-Berichte 524, Antriebstechnisches Kolloquium ATK 1984, Aachen, S. 407 - 424. Bei diesem bekannten Verfahren wird ein Ackerschlepper mit einer geeigneten Meßeinrichtung ausgerüstet, die während des Fahrbetriebs des Ackerschleppers die laufende Messung des Drehmoments und der Drehzahl des Antriebsaggregats gestattet. Daraus wird dann die momentane Leistung (Nutzleistung) des Motors berechnet, die sich durch eine Multiplikation der beiden Meßwerte ergibt. Die laufende Messung der Leistung des Aggregats kann beispielsweise für einen Alarmgeber ausgenutzt werden, der anspricht, sobald eine vorbestimmte Leistung abgegeben wird.

Zum Stand der Technik sei auch noch verwiesen auf die DE-PS 31 45 687, die eine Einrichtung zur Überwachung des Kraftstoffverbrauchs an Kraftfahrzeugen mit Schaltgetriebe beschreibt. Werden vorgegebene Werte des Kraftstoffverbrauchs sowie anderer betriebsspezifischer Daten überschritten, so wird das Schaltgetriebe im Sinne einer Minimierung des Kraftstoffverbrauchs pro gefahrene Strecke geschaltet.

Die DE-OS 29 07 679 beschreibt eine für allgemeine Zwecke vorgesehene Anordnung zur Überwachung, Aufzeichnung und Untersuchung von Betriebsparametern eines Fahrzeugs während der Fahrt. Hierzu sind geeignete Fühler und Datenverarbeitungseinrichtungen am Fahrzeug angeordnet, die auch den Kraftstoffverbrauch pro zurückgelegte Strecke anzeigen.

Demgegenüber liegt der Erfindung die Aufgabe zugrunde, ein Verfahren vorzuschlagen, welches Vorhersagen über die zu erwartende Lebensdauer von Aggregateteilen des Kraftfahrzeuges ermöglicht in dem Sinne, daß eine Trendanalyse des Wirkungsgrades des Antriebsaggregats des Kraftfahrzeugs möglich wird. Mit dem erfindungsgemäßen Verfahren soll es also möglich sein, rechtzeitig und ohne gesonderte und aufwendige Untersuchungen ausreichend sicher vorhersagen zu können, wann ein bestimmtes Aggregateteil ausgetauscht oder repariert werden muß.

Zur Lösung dieser Aufgabe ist die Erfindung dadurch gekennzeichnet, daß zusätzlich zu dem Drehmoment und der Drehzahl des Aggregats gleichzeitig und fortlaufend der zugehörige Kraftstoffverbrauch des Motors gemessen wird, daß festgestellt wird, welche der Drehzahl-Drehmoment-Datenpaare innerhalb eines bestimmten Meßbereichs gehäuft vorkommen, daß festgestellt wird, welche dieser gehäuft vorkommenden Datenpaare über eine vorbestimmte Zeit im wesentlichen konstant bleiben und daß aus dem derart ausgewählten Leistungs-Meßwerten unter Berücksichtigung der diesen Meßwerten zugeordneten Verbrauchsmeßwerten Wirkungsgrad-Meßwerte gewonnen werden, die über der Zeit aufgetragen werden.

Durch die erfindungsgemäße Verfahrensführung kann man also mit Hilfe einer gleichzeitigen und fortlaufenden Messung des Drehmoments, der Drehzahl und des Kraftstoffverbrauchs sowie einer geeigneten Auswertung dieser Daten den Wirkungsgrad des Aggregats während des Betriebs fortlaufend messen. Trägt man diese Wirkungsgrad-Meßwerte über der Zeit auf, so erhält man eine Aussage über den Trend des Wirkungsgrads des betreffenden Aggregats bzw. seiner Aggregatteile, so daß schon vor dem Ausfall der Aggregatteile oder des Aggregats entsprechende Gegenmaßnahmen getroffen werden können, insbesondere Reparatur oder Austausch des Aggregats bzw. seiner betroffenen Teile. Durch die Erfindung wird also sowohl der aktuelle Zustand von Antriebsaggregaten erkennbar, wie auch die Änderung dieses Zustands über der Zeit. Es können dann geeignete und angemessene Instandhaltungsmaßnahmen effizient vorgenommen werden und letztlich Kosteneinsparungen erzielt werden. Teuere vorbeugende Arbeiten wie auch unerwünschte Ausfälle mit unangenehmen Folgekosten können somit vermieden werden. Das erfindungsgemäße Verfahren kommt im wesentlichen mit zwei Sensoren aus, nämlich einem Drehmomentsensor und einem Kraftstoffverbrauchsensor. Der Drehmomentsensor beinhaltet aufgrund seiner einfachen, berührungslosen Bauweise eine Drehzahlerfassung und damit rechnerisch die Leistung. Weiterhin muß ein geeigneter Rechner für die Auswertung der Meßdaten vorgesehen sein.

Mit der Erfindung werden die angegebenen Ausssagen somit während des ständigen und normalen Fahrbetriebs des betreffenden Kraftfahrzeugs gewonnen. Durch die erläuterten Maßnahmen erübrigt sich eine Messung der angegebenen Daten bei Stillstand des Fahrzeugs, wie dies grundsätzlich auch möglich wäre. Eine Messung der Daten bei Stillstand ist aber arbeits-und zeitaufwendig. Weil man erfindungsgemäß nur die gehäuft vorkommenden Drehzahl-Drehmoment-Datenpaare erfaßt und von diesen Datenpaaren auch nur diejenigen, die über eine vorbestimmte Zeit im wesentlichen konstant bleiben, werden die während des normalen Fahrbetriebs bei der Messung auftretenden und die angestrebte Trendanalyse verfälschenden Einflüsse statistisch ausgeglichen. Solche verfälschenden Einflüsse sind beispielsweise Bergfahrten, die naturgemäß einen erhöhten Kraftstoffverbrauch mit sich bringen, Schubbetrieb des Kraftfahrzeugs, der durch einen außergewöhnlich niedrigen Kraftstoffverbrauch gekennzeichnet ist, usf.

Vorstehend wurde darauf hingewiesen, daß solche Drehzahl-Drehmoment-Datenpaare ausgewählt werden, die innerhalb eines bestimmten Meßbereichs gehäuft vorkommen. Die Auswahl dieses Meßbereichs wird man den jeweiligen Gegebenheiten anpassen. Versuche haben gezeigt, daß man gut brauchbare Ergebnisse erhält, wenn diejenigen Drehzahl-Drehmoment-Datenpaare als gehäuft vorkommend angesehen werden, die von einem Mittelwert um nicht mehr als etwa ± 0,5 % abweichen.

Ähnliches gilt für diejenige Zeitspanne, in der die Drehzahl-Drehmoment-Datenpaare als zeitlich im wesentlichen konstant angesehen werden. Auch hier haben Versuche ergeben daß hierfür eine Zeitspanne von etwa 5 Sekunden ausreicht, in der sich die Meßwerte um nicht mehr als die angegebenen etwa ±0,5 % ändern sollen.

Die Erfindung wird im folgenden anhand eines Ausführungsbeispiels näher erläutert, aus dem sich weitere wichtige Merkmale ergeben. Es zeigt:

Fig. 1 - ein Diagramm, in dem Meßdaten über der Zeit aufgetragen sind, die bei einem Kraftfahrzeug bei Bergabfahrt und Stadtverkehr erhalten wurden;

Fig. 2 - das Motor-Kennfeld eines hierbei verwendeten Motors;

Fig. 3 - den Verlauf des Wirkungsgrads für verschiedene sogenannte Kennfeld-Fenster nach Fig. 2;

Fig. 4 - die hieraus abgeleitete Trendanalyse des Motorwirkungsgrades.

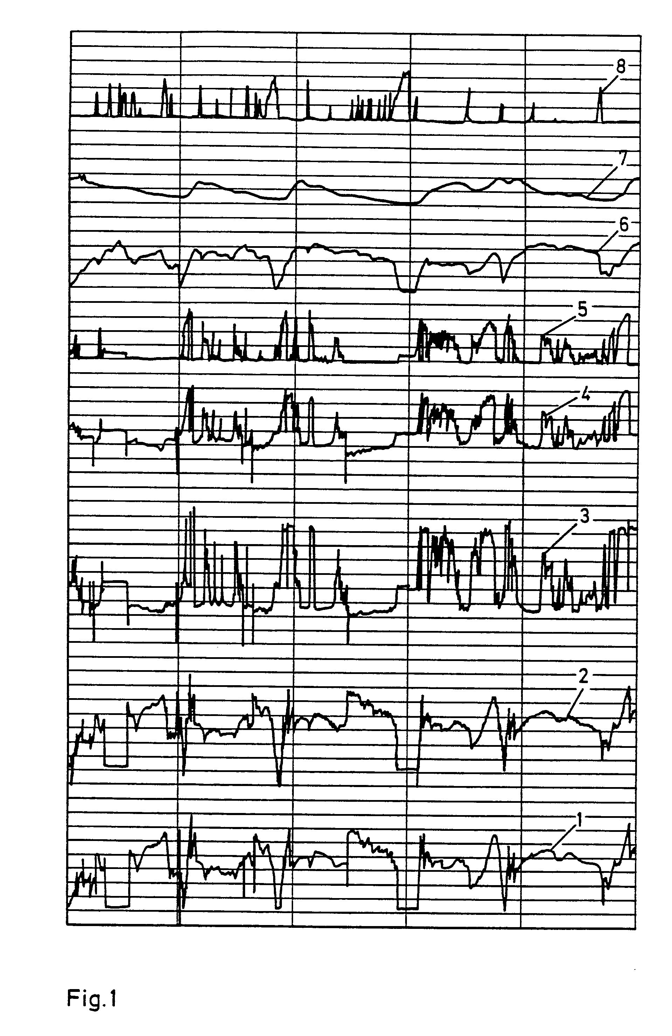

In Fig. 1 sind die bei einem mit dem erfindungsgemäßen Meßsystem ausgerüsteten Kraftfahrzeug erhaltenen Meßwerte im realen Fahrbetrieb über der Zeit aufgetragen. Eine untere Kurve 1 zeigt die in Umdrehungen pro Minute gemessene Motordrehzahl an. Darüber befindet sich eine Kurve 2, die die Drehzahl am Getriebeeingang anzeigt, ebenfalls in Umdrehungen pro Minute gemessen. Darüber befindet sich eine Kurve 3, die das gemessene Drehmoment in Nm angibt. Die abermals darüber befindliche Kurve 4 zeigt die aus der Drehmomentenkurve und der Drehzahlkurve berechnete Leistungskurve an, und zwar gemessen in KW. Abermals darüber befindet sich eine Kurve 5, die den gemessenen Kraftstoffverbrauch in ml pro Minute angibt. Eine darüber befindliche Kurve 6 ergibt die in km pro Stunde gemessene Geschwindigkeit des Kraftfahrzeugs. Darüber wiederum befindet sich eine Kurve 7, die die in Grad Celsius gemessene Abgastemperatur angibt und eine darüber befindliche Kurve 8 zeigt den in bar gemessenen Bremsdruck an.

Wesentlich für die Verarbeitung der gewonnenen Daten sind die Kurven 4 und 5, die also die Nutzleistung und den Kraftstoffverbrauch angeben.

Der Wirkungsgrad ergibt sich als Quotient aus der Nutzleistung, die an der Kurbel-Getriebeeingangswelle abgenommen werden kann, dividiert durch die pro Zeiteinheit eingesetzte Kraftstoffenergie.

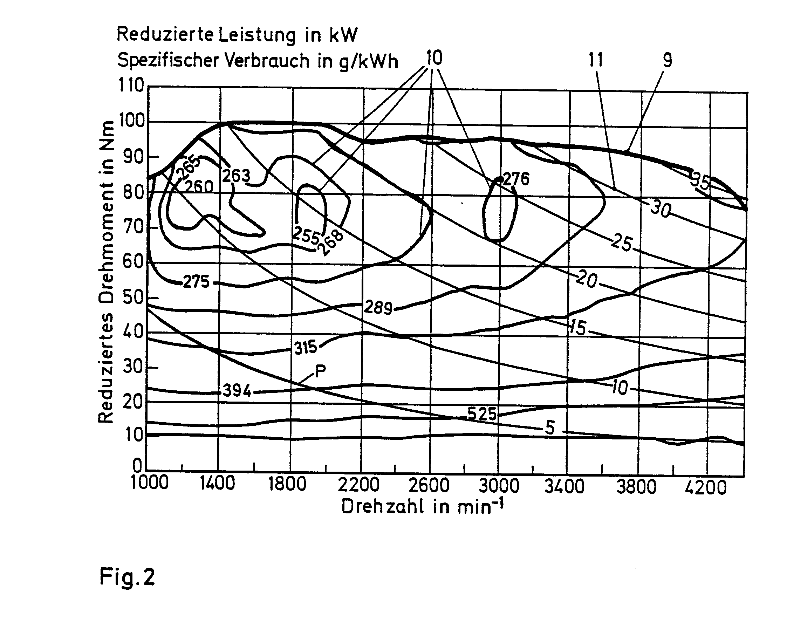

Fig. 2 zeigt ein Motor-Kennfeld, wobei als Beispiel ein Dieselmotor der Nutzleistung 37 KW genommen wurde. Über der in Umdrehungen pro Minute gemessenen Drehzahl ist in Fig. 2 das in Nm gemessene reduzierte Drehmoment aufgetragen. Gleichzeitig ist in das Kennfeld der spezifische Verbrauch dieses Motors eingetragen, und zwar angegeben in g/kWh. Die obere, dickere Linie 9 läßt die Vollast-Begrenzung des Motors im Motorkennfeld erkennen. Unterhalb dieser Linie 9 befinden sich muschelförmige Kurven 10, die den zugehörigen Kraftstoffverbrauch erkennen lassen. Diese Kraftstoffverbrauchszahlen sind bei diesen Kurven 10, die auch in sich geschlossen sein können, in Fig. 2 ebenfalls angegeben. Beispielsweise ergeben sich Kurven 10 mit einem minimalen Kraftstoffverbrauch von 255 g/kWh. Eine Hyperbelschar von Kurven 11 zeigt die jeweiligen Last-bzw. Teillastbereiche, die beim gezeigten Beispiel zwischen 5 KW und 37 KW (Kurve 9) liegen.

Für definierte Betriebspunkte des Motor-Kennfeldes nach Fig. 2 werden nun kontinuierlich die sich einstellenden Wirkungsgrade des Motors ermittelt und ihr Verlauf über der individuellen Einsatzzeit des betreffenden Antriebs dargestellt.

Mit Hilfe eines Suchprogramms ermittelt eine zugeordnete Rechneranlage zunächst nach dem Verweildauerverfahren für das Drehmoment-Drehzahl-Motorkennfeld diejenigen Klassenfelder mit der höchsten Belegungsdauer und Belegungsdichte. Beispielsweise wird hierzu das Motorkennfeld in zehn Klassen des Drehmoments und zwanzig Klassen der Drehzahl eingeteilt.

Beispielsweise für sechs Klassenfelder höchster Belegung werden in einem zweiten Schritt erneut 10 mal 20 Drehmoment-Drehzahl-Klassen gebildet und nach den Klassenfeldern mit höchster Verweildauer untersucht.

Dieses Verfahren wird solange wiederholt, bis beispielsweise sechs Drehmoment-Drehzahl-Bereiche oder Fenster hinreichender Einengung gefunden sind. Die Bereiche mit hinreichender Einengung werden beispielsweise so definiert, daß in diesen Bereichen der Nennwert um ± 0,5 % von einem Mittelwert abweichen darf. Diese Bereiche werden für die typischen Einsatzarten des betreffenden Fahrzeugs als verbindlich für die Wirkungsgradbestimmung angesehen, da hier die quasi-stationären Betriebsbedingungen weitestgehend erfüllt werden.

Für jedes der so definierten Bereiche oder Fenster wird nun fortlaufend der Wirkungsgrad in seinem Trend verfolgt, um aus Abweichungen vom repräsentativen Referenzwert Schlüsse auf den Ist-Zustand des Motors ziehen zu können. Dabei bedient man sich der Methode des gleitenden Mittelwerts aus den jeweils beispielsweise zehn letzten Wirkungsgradwerten eines jeden Bereichs.

Zu jedem Bereich gehört ein Kraftstoffwert und somit ein bestimmter Wirkungsgrad. Verweilt das Drehmoment-Drehzahl-Datenpaar hinreichend lange, d.h. quasi stationär, in einem Bereich, so wird der Kraftstoffverbrauch in dieser Zeit dem im Rechner gespeicherten Wert des Kraftstoffverbrauchs entnommen. Die daraus gewonnene Wirkenergie wird kumulativ dem entsprechenden Speicher des Rechners zugeschrieben.

Dieser Vorgang wiederholt sich solange, bis der Kraftstoffspeicher des Rechners geleert ist. Die bis zu diesem Zeitpunkt kumulierte Wirkenergie wird nun auf die in Form von Kraftstoff aufgewendete Primärenergie bezogen. Der Wirkungsgrad ist bestimmt und wird zur gleitenden Mittelwertbildung herangezogen. Dieser Vorgang wiederholt sich erneut, wenn der Speicherinhalt des Kraftstoffspeichers verbraucht ist. Der gleitende Mittelwert pro Bereich wird in einem Zeitdiagramm dargestellt.

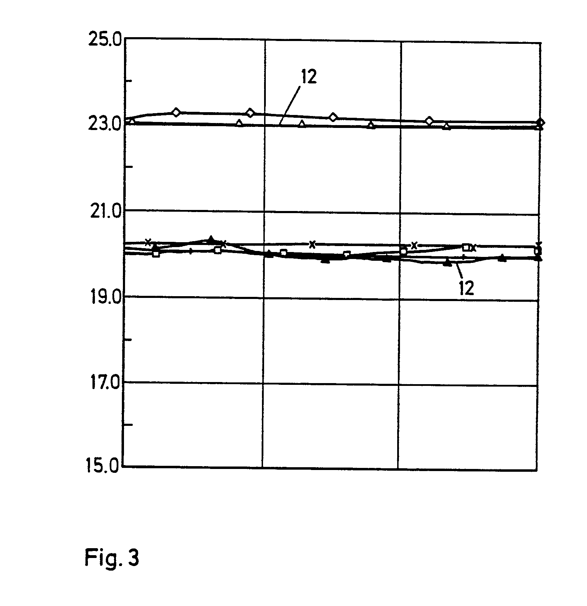

Dies zeigt Fig. 3, wo über der Zeit der Wirkungsgrad (in %) für insgesamt sechs verschiedene Bereiche oder Fenster des Kennfeldes aufgetragen ist. Es ergeben sich nur geringe Schwankungen im Wirkungsgradverlauf, die auf Meßungenauigkeiten zurückgeführt werden können. Im Beispiel von Fig. 3 ändert sich der gemessene Wirkungs grad über der Zeit also praktisch nicht bzw. nur in vernachläßigbaren und durch Meßungenauigkeiten bzw. statistische Schwankungen bedingten Grenzen.

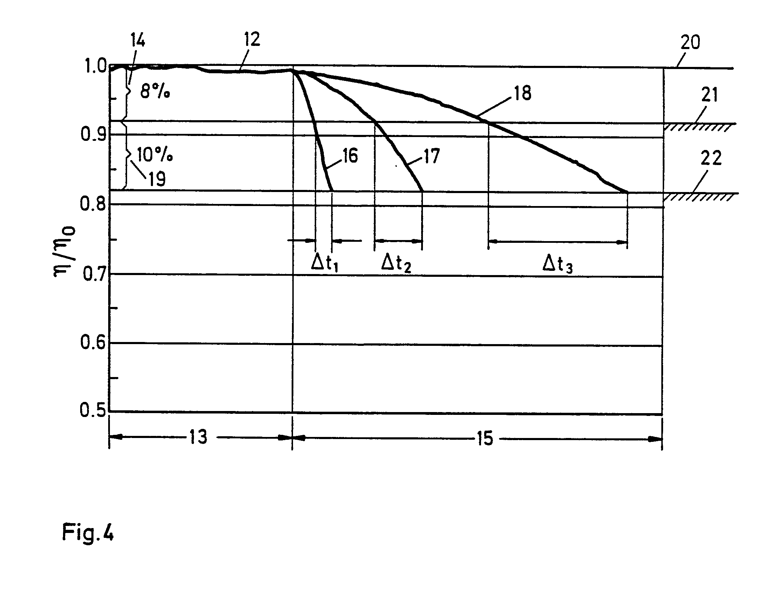

Fig. 4 zeigt, ebenfalls über der Zeit aufgetragen, in normierter Darstellung den real ermittelten Verlauf des Motor-Kennfeld-Fensters der Kurve 12 nach Fig. 3 bei 72,5 Nm und 3955 Umdrehungen pro Minute (Klassenmittelwerte), und zwar in einem ersten Teil von Fig. 4 über der realen Einsatzzeit 13. Dabei wurde der aktuelle Wert des Wirkungsgrades normiert auf den Referenzwert des Wirkungsgrades, der zu Beginn der Inbetriebnahme des Fahrzeugs als Sollwert unter der Voraussetzung eines optimal eingestellten Motors erfaßt wurde. Es zeigt sich, daß während der realen Einsatzzeit 13 die Kurve 12 nur geringfügig schwankt, wie dies auch schon aus der Kurve 12 in Fig. 3 abzuleiten ist. Dabei wurden die einzelnen Verlaufswerte aus den gleitenden Mittelwerten des anstehenden Wirkungsgrades gebildet, um durch Glättung der Kurven markante Abweichungen frühzeitig zu erkennen, andererseits zulässige Streuungen der Werte nicht als abnormal zu registrieren.

In Fig. 4 wurde ein zulässiger Streubereich 14 von in diesem Beispiel 8 % ebenfalls definiert und Fig. 4 zeigt, daß während der Einsatzzeit 13 der Verlauf der Kruve 14 weit innerhalb des zulässigen Streubereichs 14 bleibt.

In Fig. 4 ist außerdem ein Prognosebereich 15 angegeben, der sich an die reale Einsatzzeit 13 anschließt. Der Verlauf der Kurve 12 im Prognosebereich 15 gibt die mögliche Entwicklung des Wirkungsgrades prognostiziert wieder. Dabei sind drei grundsätzliche Entwicklungsmöglichkeiten angegeben:

Die Kurve 16 zeigt einen dramatischen Abfall des Wirkungsgrades und erfordert daher schnellste Instandsetzungsmaßnahmen.

Die Kurve 17 zeigt einen stetigen Wirkungsgradabfall mittleren Ausmaßes und erfordert daher eine aufmerksame Beobachtung.

Die Kurve 18 schließlich ist durch einen allmählichen Wirkungsgradabfall gekennzeichnet und daher unkritisch. Sie verspricht eine lange Einsatzzeit des betreffenden Aggregats ohne Instandhaltungsmaßnahmen.

Bei der Kurve 16 kann beispielsweise die Einspritzpumpe des Aggregats verstopft sein, wobei es sich also um ein spontanes Ereignis handelt. Bei der Kurve 17 kann es sich beispielsweise um den Verschleiß der Einspritzpumpe handeln, d.h. um eine mittelfristige Schadensentwicklung. Bei der Kurve 18 kann es sich beispielsweise um eine Verschmutzung des Luftfilters handeln, d.h. um eine kontinuierliche und langfristige Schadensentwicklung.

Fig. 4 zeigt auch einen eingeschränkten Betriebsbereich 19 der beispielsweise durch einen Abfall von 10 % definiert wird. Dadurch ergibt sich in Fig. 4 (von oben nach unten) ein Referenzwert 20 = 1,0 darunter ein erster Grenzwert 21, ab dem das Aggregat gewartet bzw. neu eingestellt werden sollte, und abermals darunter ein zweiter Grenzwert 22, der eine Instandsetzung des Aggregats oder des betreffenden Aggregatteils verlangt. In Fig. 4 sind außerdem die Zeitintervalle angegeben, während der sich die Kurven 16, 17,18 zwischen den Referenzwerten 21 und 22 befinden.

Die angeführten Bereichsgrenzen 21, 22 sind hinsichtlich der Grenzwerte so gewählt, daß zulässige Streuungen deutlich von eingeschränkten Betriebsbereichen abgesetzt sind. Werden die Grenzwerte erreicht, so sind entsprechende Maßnahmen vorzunehmen. Das Erreichen des Grenzwertes von < 92 % erfordert Wartungs-bzw. Einstellarbeiten im Antriebsbereich Unterhalb des Grenzwerts von 82 % müssen Instandsetzungsarbeiten durchgeführt werden, um die ursprüngliche Leistungsfähigkeit des Antriebs wieder zurückzugewinnen.

Die Unterscheidung zwischen kritischen und unkritischen Wirkungsgradverläufen ist aus der Gradientenanalyse in der Zeitdifferenz $\Delta t$ zu erhalten. Je steiler der Abfall ist, desto kritischer ist der Zustand des betreffenden Aggregats.

Neben der Einsatzzeit spielt die vom Antriebssystem umgesetzte Energie die entscheidende Rolle, die letztendlich für die fortlaufende Schädigung verantwortlich ist. Durch Kumulation der belastungsabhängigen Energiebeträge wird somit eine energieumsatzbezogene Nutzdauer definierbar.

Das beschriebene Verfahren setzt voraus, daß nur quasistationäre Betriebszustände über der Einsatzzeit untersucht werden.

Dem eigentlichen Wirkungsgrad-Nutzsignal überlagert sind einige Störeinflüsse, deren Größenordnung abgeschätzt werden muß und die nach Möglichkeit zu kompensieren sind: Der Wirkungsgrad-Referenzwert (Sollwert) ist bei optimal eingestelltem Motor zu ermitteln, da sonst Wirkungsgradwerte über 1 auftreten können. Der barometrische Höheneinfluß (Luftdruckschwankungen) auf die Wirkleistung des Motors muß berücksichtigt bzw. korrigiert werden. Als Faustregel gilt, daß 600 m Höhendifferenz die Wirkleistung um 7 % beeinflussen. Die Schwankungen des Heizwertes des Kraftstoffs müssen berücksichtigt werden. Auch hierfür gibt es Erfahrungswerte. Weiterhin hat die Temperatur des Kraftstoffs über Dichteänderungen Einfluß auf den Massenstrom und auch hierüber gibt es Erfahrungswerte.

Für die laufende Messung des Kraftstoffverbrauchs wird man ein handelsübliches Meßgerät nehmen. Für die laufende Messung von Drehzahl und Drehmoment kann man ein Meßgerät wählen, wie es in der Patentanmeldung P 35 09 763 beschrieben worden ist.

Es ist somit ersichtlich, daß das beschriebene Verfahren zu fühlbaren Kosteneinsparungen bei dem betreffenden, überwachten Fahrzeug führt. Ohne wesentlichen manuellen Aufwand kann während der gesamten Nutzungsdauer eines Fahrzeugs selbsttätig eine wesentliche Information über den aktuellen Zustand des Antriebs gewonnen werden. Damit ist der Handlungsbedarf für Instandhaltungsmaßnahmen meßtechnisch erfaßbar. Plötzliche Ausfälle mit teils verheerenden Folgekosten sowie auf Unsicherheiten beruhende, vorbeugende Instandhaltungskosten sind nicht mehr nötig. Über den Nutzeffekt im Instandhaltungsbereich hinaus werden wertvolle Informationen für das Einsatzverhalten des Fahrzeugs gewonnen, aus denen Zuverlässigkeits-und Verfügbarkeitskennwerte abgeleitet werden können.

## Ansprüche

1. Verfahren zur laufenden Messung der Leistung eines Kraftfahrzeug-Antriebsaggregats während des Fahrzeugbetriebs, wobei das Drehmoment und die zugehörige Drehzahl gemessen werden und daraus die Leistung des Motors bestimmt wird,
**dadurch gekennzeichnet,**
daß zusätzlich zu dem Drehmoment und der Drehzahl des Aggregats gleichzeitig und fortlaufend der zugehörige Kraftstoffverbrauch des Motors gemessen wird,
daß festgestellt wird, welche der Drehzahl - Drehmoment - Datenpaare innerhalb eines bestimmten Meßbereichs gehäuft vorkommen,
daß festgestellt wird, welche dieser gehäuft vorkommenden Datenpaare über eine vorbestimmte Zeit im wesentlichen konstant bleiben
und daß aus den derart ausgewählten Leistungs-Meßwerten unter Berücksichtigung der diesen Meßwerten zugeordneten Verbrauchsmeßwerte Wirkungsgrad-Meßwerte gewonnen werden, die über der Zeit aufgetragen werden.

2. Verfahren nach Anspruch 1,
**dadurch gekennzeichnet,**
daß diejenigen Drehzahl-Drehmoment-Datenpaare als gehäuft vorkommend angesehen werden, die von einem Mittelwert um nicht mehr als etwa ± 0,5 % abweichen.

3. Verfahren nach Anspruch 1,
**dadurch gekennzeichnet,**
daß diejenigen Drehzahl-Drehmoment-Datenpaare als zeitlich konstant angesehen werden, deren Werte sich über etwa fünf Sekunden um nicht mehr als etwa ± 0,5 % ändern.

0 289 747

Fig.1

Fig.2

Fig. 3

Fig.4

## EINSCHLÄGIGE DOKUMENTE

EP 88103950.7

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US - A - 3 960 012 (INGRAM)<br><br>* Fig. 1; Spalte 1, Zeilen 42-51; Spalte 5, Zeile 37 - Spalte 6 *<br><br>-- | 1 | G 01 L 3/26<br><br>G 01 M 15/00 |
| A | GB - A - 2 075 687 (CRANE)<br><br>* Fig. 1; Zusammenfassung; Seite 2, Zeile 103 - Seite 3, Zeile 19; Seite 4, Zeilen 44-57 *<br><br>-- | 1 | |
| A | CH - A5 - 629 303 (SELBST-FINANZIERUNGSANSTALT)<br><br>* Gesamt *<br><br>---- | 1 | |

| | RECHERCHIERTE SACHGEBIETE (Int. Cl.4) |
|---|---|
| | G 01 L 3/00 |
| | G 01 M 15/00 |
| | G 01 M 17/00 |

Der vorliegende Recherchenbericht wurde für alle Patentansprüche erstellt.

| Recherchenort | Abschlußdatum der Recherche | Prüfer |
|---|---|---|
| WIEN | 01-08-1988 | BURGHARDT |